# EUROPEAN PATENT APPLICATION

(11) **EP 2 051 530 A2**
(43) Date of publication of application: **22.04.2009**
(21) Application number: 08166417.9
(22) Date of filing: 13.10.2008
(51) Int. Cl.: H04N 7/26

(54) **Video encoding apparatus and method using pipeline technique with variable time slot**

(30) Priority: 17.10.2007 KR 20070104620; 10.09.2008 KR 20080089241
(71) Applicant: Electronics and Telecommunications Research Institute, Yuseong-gu, Daejeon 305-350 (KR)
(72) Inventor: Lee, Suk Ho, Daejeon (KR); Shin, Kyoung Seon, Daejeon (KR); Han, Jin Ho, Seoul (KR); Park, Seong Mo, 552-3, Noeun-don, Yuseong-gu Daejeon (KR); Eum, Nak Woong, Daejeon (KR)
(74) Representative: Sieckmann, Dirk Christoph

(57) **Abstract**

A video encoding apparatus and method using a pipeline technique with a variable time slot are provided. More particularly, a video encoding apparatus and method capable of shortening a video encoding time by variably adjusting lengths of time slots when an H.264 video encoding process is performed in a pipeline structure are provided. The video encoding apparatus includes a plurality of functional blocks that perform video encoding steps based on an H.264 standard for macroblocks configuring input digital video signals in a pipeline structure, and a controller that controls lengths of time slots configuring the pipeline structure based on done signals received from the plurality of functional blocks. Lengths of time slots can be adjusted according to operation times of video encoding steps using done signals generated from functional blocks, thereby preventing unnecessary power consumption and delays when using a fixed-length time slot.

## Description

### CROSS-REFERENCE TO RELATED APPLICATION

This application claims priority to and the benefit of Korean Patent Application No. 2007-0104620, filed October 17, 2007, and Korean Patent Application No. 2008-0089241, filed September 10, 2008, the disclosure of which is incorporated herein by reference in its entirety.

### BACKGROUND

### 1. Field of the Invention

The present invention relates to a video encoding apparatus and method using a pipeline technique with a variable time slot, and more particularly, to a video encoding apparatus and method for shortening a video encoding time by variably adjusting lengths of time slots when an H.264 video encoding process is performed in a pipeline structure.

This work was supported by the IT R&D program of MIC/IITA, [2007-S026-01, Multiformat Multimedia SoC based on MPCore Platform].

### 2. Discussion of Related Art

An H.264 standard is a new video compression standard designed to provide efficient and stable encoding and support video/image transmission. At present, the H.264 standard is a next-generation video compression technology with high compression speed and high transmission reliability. It is expected that the H.264 standard, combined with a next-generation satellite digital multimedia broadcasting (DMB) service or the like, will have various applications in high-definition video compression and video transmission via the Internet or cable modem, digital data broadcasting, next-generation mobile phones, etc.

In general, a video encoding process based on the H.264 standard includes the steps of integer motion estimation (IME), fine motion estimation/motion compensation (FME/MC), intra prediction (IP), context-adaptive variable length coding (CAVLC), and deblocking (DB). The video encoding steps are iterated for a plurality of macroblocks. Herein, the macroblock is a unit of data into which an image corresponding to one video frame is divided according to given criteria.

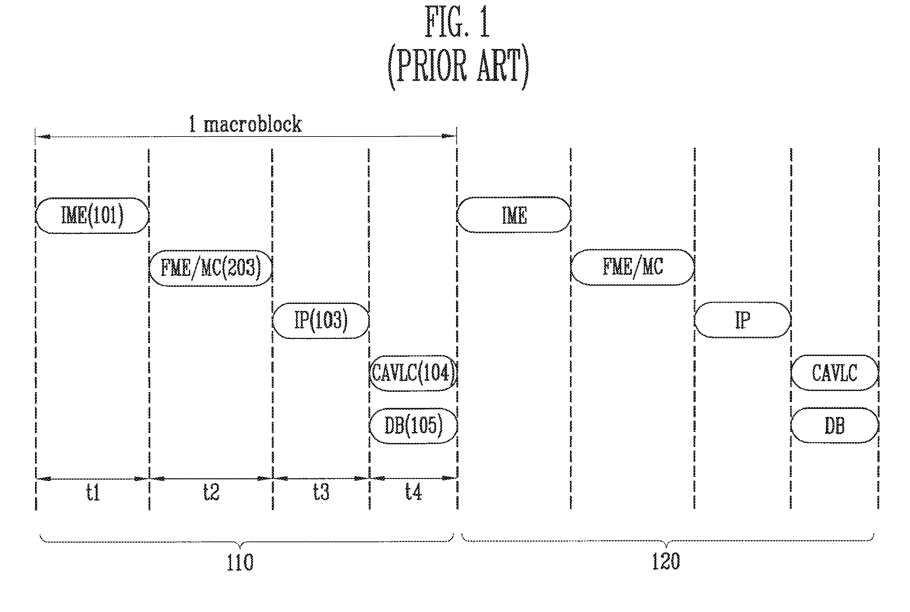

FIG. 1 is a conceptual diagram showing an operation of a conventional video encoding apparatus without use of a pipeline structure.

Referring to FIG. 1, the conventional video encoding apparatus without use of the pipeline structure sequentially performs IME 101, FME/MC 102, IP 103, CAVLC 104, and DB 105 for one macroblock. The steps are iterated in units of macroblocks. In general, the CAVLC 104 and DB 105 are simultaneously performed in the same time slot according to video encoding characteristics based on the H.264 standard.

In the operation of the conventional video encoding apparatus without use of the pipeline structure, the IME 101, FME/MC 102, IP 103, and CAVLC 104/DB 105 are independently performed in time slots t1, t2, t3, and t4, respectively. In a process for processing a plurality of macroblocks configuring one frame, video encoding steps 120 for the next macroblock may be performed after completion of all video encoding steps 110 for one macroblock, that is, after the IME 101, FME/MC 102, IP 103, CAVLC 104, and DB 105.

On the other hand, a video encoding apparatus has been proposed for simultaneously performing a plurality of video encoding steps in one time slot using a pipeline structure by considering that the IME, FME/MC, IP, CAVLC, and DB may be performed in separate modules.

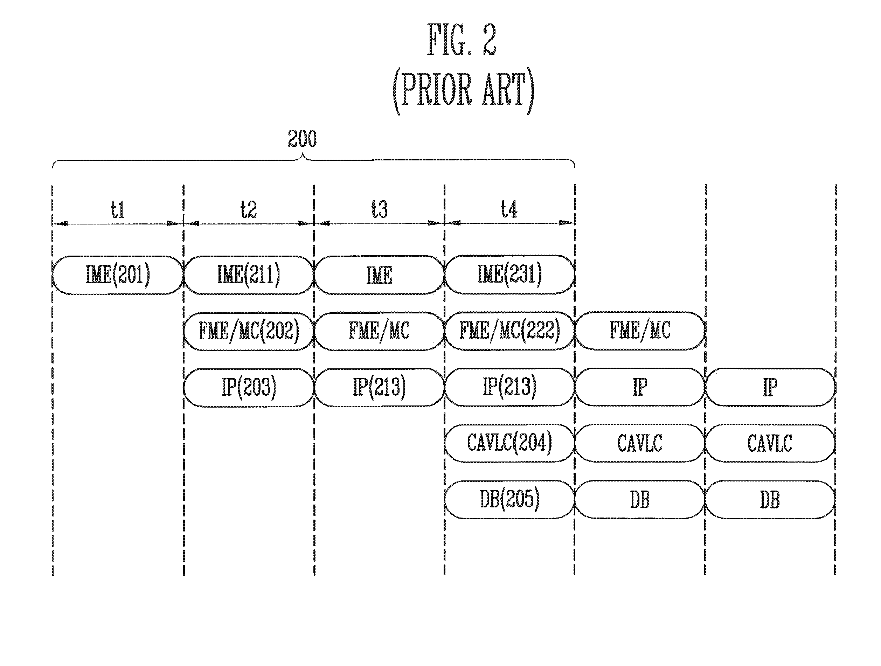

FIG. 2 is a conceptual diagram showing an operation of a conventional video encoding apparatus using a pipeline structure.

Referring to FIG. 2, the conventional video encoding apparatus using the pipeline structure may perform a video encoding step for another macroblock simultaneously when a video encoding step for one macroblock is performed.

For example, when IME 201, FME/MC 202, IP 203, CAVLC 204, and DB 205 for a first macroblock are sequentially performed, the conventional video encoding apparatus using the pipeline structure may perform IME 211 for a second macroblock in time slot t2 simultaneously when the FME/MC 202 for the first macroblock is performed.

When the pipeline structure is used, only one video encoding step is not performed in one time slot, but video encoding steps for macroblocks may be simultaneously performed. Therefore, the video encoding apparatus using the pipeline structure may perform faster video encoding than the video encoding apparatus without use of the pipeline structure. For example, in one time slot such as time slot t4, IME 231, FME/MC 222, IP 213, CAVLC 204, and DB 205 may be simultaneously performed.

On the other hand, the conventional video encoding apparatus using the pipeline structure ensures sufficient operation times of video encoding steps by fixing time slots t1, t2, t3, and t4 to given lengths. However, IME, FME/MC, IP, CAVLC, and DB have variable operation times according to macroblock characteristics. When all video encoding steps are completed before a time slot ends, a latency time may occur without any operation until the next time slot starts. Accordingly, the conventional video encoding apparatus uses fixed-length time slots without considering variable operation times of video encoding steps. This results in an unnecessary delay time and unnecessary power consumption for video encoding.

### SUMMARY OF THE INVENTION

The present invention is directed to a video encoding apparatus and method that can improve efficiency when using a fixed-length time slot in a video encoding process using a pipeline structure.

According to an aspect of the present invention, there is provided a video encoding apparatus including: a plurality of functional blocks that perform video encoding steps based on an H.264 standard for macroblocks configuring input digital video signals in a pipeline structure; and a controller that controls lengths of time slots configuring the pipeline structure based on done signals received from the plurality of functional blocks.

According to another aspect of the present invention, there is provided a video encoding method including: (a) estimating motion vectors of macroblocks configuring input digital video signals and determining an optimal inter mode; (b) computing a unit motion vector cost based on the estimated motion vectors and the determined inter mode; (c) predicting an optimal intra mode based on the unit motion vector cost; (d) entropy-encoding macroblocks for which the intra mode prediction has been completed; and (e) deblocking and filtering the entropy-encoded macroblocks, wherein steps (a) to (e) are performed in a pipeline structure; (f) receiving done signals from a plurality of functional blocks for performing steps (a) to (e); and (g) controlling lengths of time slots configuring the pipeline structure in response to receipt of the done signals.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:

FIG. 1 is a conceptual diagram showing an operation of a conventional video encoding apparatus without use of a pipeline structure;

FIG. 2 is a conceptual diagram showing an operation of a conventional video encoding apparatus using a pipeline structure;

FIG. 3 is a block diagram showing a structure of a video encoding apparatus using a pipeline technique with a variable time slot according to an exemplary embodiment of the present invention;

FIG. 4 is a block diagram showing a configuration of a controller of the video encoding apparatus according to an exemplary embodiment of the present invention;

FIG. 5 is a timing diagram showing an operation of the controller configuring the video encoding apparatus according to an exemplary embodiment of the present invention; and

FIG. 6 is a flowchart showing an operation sequence of the video encoding apparatus according to an exemplary embodiment of the present invention.

### DETAILED DESCRIPTION OF EXEMPLARY EMBODIMENTS

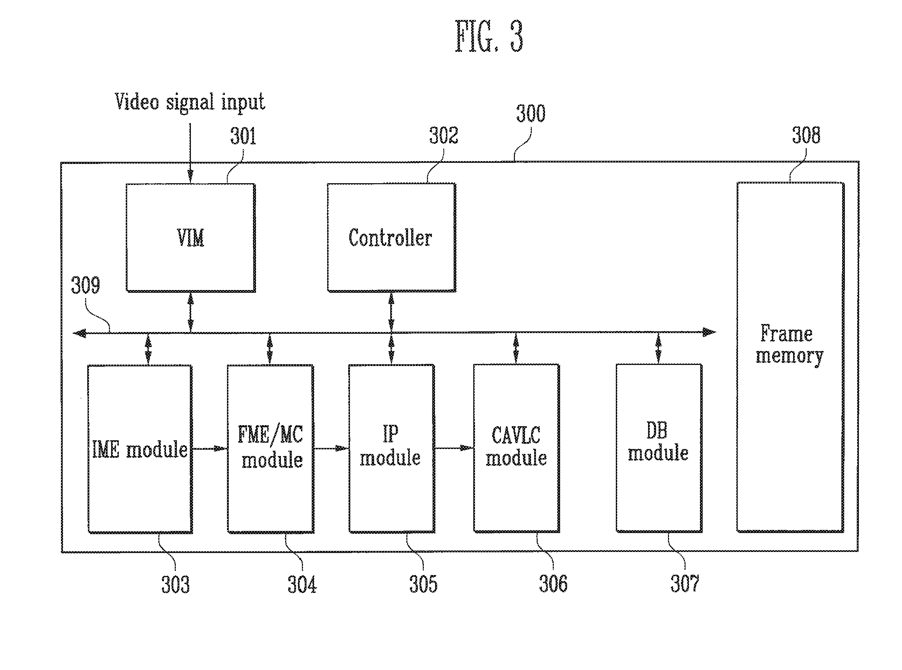

FIG. 3 is a block diagram showing a structure of a video encoding apparatus using a pipeline technique with a variable time slot according to an exemplary embodiment of the present invention.

Referring to FIG. 3, a video encoding apparatus 300 of the present invention includes a video input module (VIM) 301, controller 303, IME module 303, FME/MC module 304, IP module 305, CAVLC module 306, and DB module 307. The video encoding apparatus 300 further includes a frame memory 308 for storing input video signals and macroblocks and a data bus 309 for connecting the modules (blocks).

The VIM 301 is responsible for receiving digital video signals from an outside source and storing the received signals in units of macroblocks in the frame memory 308. The VIM 301 is responsible for receiving vertical and horizontal synchronization signals of the video signals and data bus signals and sending the received signals to functional blocks.

The controller 302 determines lengths of time slots in response to done signals of the functional blocks 303, 304, 305, 306, and 307 for performing video encoding steps and generates start signals to operate the functional blocks according to the determined time slot lengths.

In an exemplary embodiment, the controller 302 receives the done signals from the IME module 303, FME/MC module 304, IP module 305, CAVLC module 306, and DB module 307 and determines the ends of the time slots based on the received done signals. Upon determining that a time slot has ended, the controller 302 sends the start signal to each functional block to begin the next time slot.

The IME module 303 estimates 2-pixel unit motion vectors of the macroblocks configuring the input digital video signals and determines an optimal inter mode. In an exemplary embodiment, the IME module 303 performs the above-described process using the macroblocks stored in the frame memory 308.

The FME/MC module 304 extracts 1- and 1/2-pixel unit motion vectors for inter mode blocks based on the estimated motion vectors and the determined inter mode from the IME module 303 and computes a cost thereof. The FME/MC module 304 performs motion compensation on Y, U, and V values of the video signals.

The IP module 305 predicts an optimal intra mode based on the unit motion vector cost computed in the FME/MC module 304.

The CAVLC module 306 entropy-encodes macroblocks for which intra mode prediction has been completed in the IP module 305. The DB module 307 deblocks and filters the encoded macroblocks and stores results in the frame memory 308.

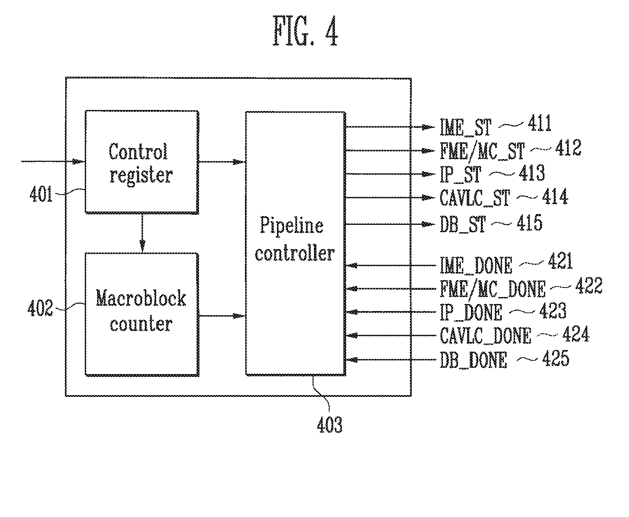

FIG. 4 is a block diagram showing a configuration of the controller of the video encoding apparatus according to an exemplary embodiment of the present invention.

Referring to FIG. 4, the controller includes a control register 401, a macroblock counter 402, and a pipeline controller 403.

The control register 401 sets a parameter value required for video compression based on resolution of digital video signals. The macroblock counter 402 computes the number of macroblocks configuring one frame of the digital video signals using the parameter value set by the control register 401.

The pipeline controller 403 receives IME_DONE 421, FME/MC_DONE 422, IP_DONE 423, CAVLC_DONE 424, and/or DB_DONE 425 and determines whether a present time slot in progress has ended.

Here, the IME_DONE 421, FME/MC_DONE 422, IP_DONE 423, CAVLC_DONE 424, and DB_DONE 425 are signals generated from the IME, FME/MC, IP, CAVLC, and DB modules, respectively. When the video encoding steps for one macroblock are completed, the IME, FME/MC, IP, CAVLC, and DB modules send the done signals to the pipeline controller 403. Accordingly, when the done signals are received from all functional blocks operating in a corresponding time slot, the pipeline controller 403 sends IME_ST 411, FME/MC_ST 412, IP_ST 413, CAVLC_ST 414, and/or DB_ST 415 to the functional blocks to begin the next time slot.

The pipeline controller 403 can control video encoding steps for a plurality of macroblocks configuring one frame to be executed in the pipeline structure on the basis of the parameter value set in the control register 401 and the number of macroblocks computed in the macroblock counter 402.

For example, when video encoding is performed for a frame configured with N macroblocks, the IME is performed in first to N-th time slots, the FME/MC is performed in second to (N+1)-th time slots, the IP is performed in third to (N+2)-th time slots, and the CAVLC and DB are performed in fourth to (N+3)-th time slots. Accordingly, the pipeline controller 403 sends corresponding start signals in a time slot sequence such that the video encoding steps can be performed in the above-described sequence. When all done signals are received from functional blocks operating in a corresponding time slot, it can be determined that the corresponding time slot has ended.

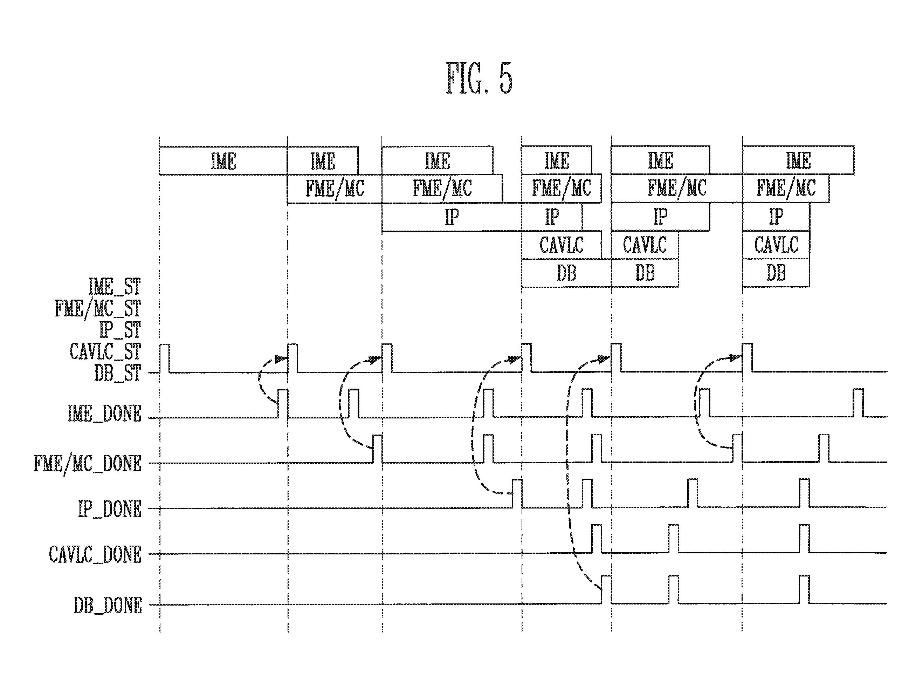

FIG. 5 is a timing diagram showing an operation of the controller configuring the video encoding apparatus according to an exemplary embodiment of the present invention.

Hereinafter, for convenience of description, it is assumed that one frame is configured with N macroblocks.

Referring to FIG. 5, when the controller receives all done signals corresponding to start signals generated from the start of a time slot, it is determined that the corresponding time slot has ended. When the corresponding time slot has ended, start signals corresponding to video encoding steps to be performed in the next time slot are generated and then the next time slot begins.

Referring to the timing diagram of FIG. 5, the controller first generates IME_ST and starts a first time slot in which IME for a first macroblock is performed. When IME_DONE is received, the controller generates IME_ST and FME/MC_ST to start a second time slot in which FME/MC for the first macroblock and IME for a second macroblock are performed.

When all IME_DONE and FME/MC_DONE are received in the second time slot, the controller generates IME_ST, FME/MC_ST, and IP_ST to start a third time slot. Also in a subsequent time slot, the controller controls the pipeline structure to perform the next time slot when all done signals corresponding to start signals generated from the start of a corresponding time slot are received.

In the method described above, the controller can variably adjust a corresponding time slot length in each stage according to an operation time of a video encoding step. This is different from the conventional video encoding apparatus using a fixed-length time slot.

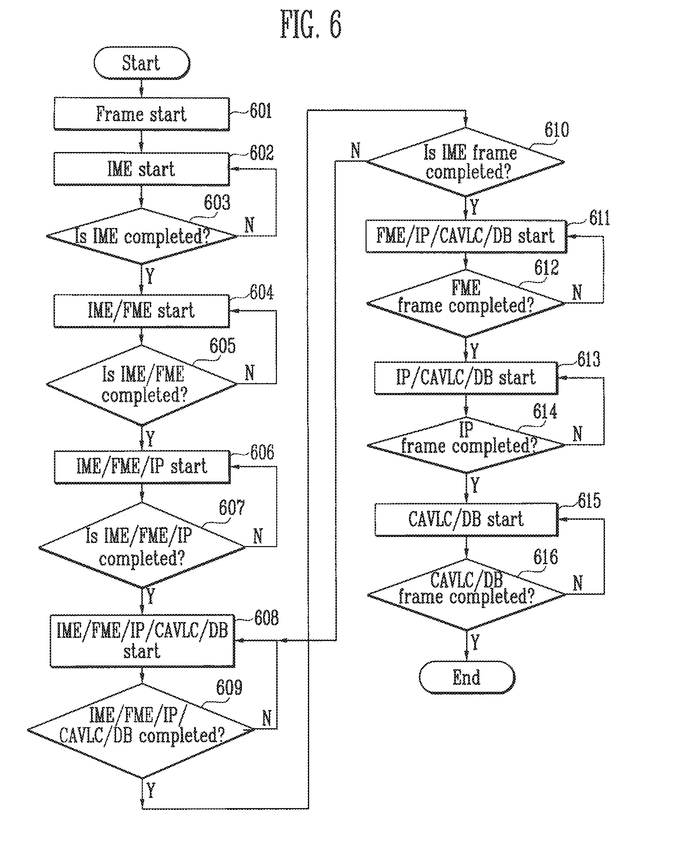

FIG. 6 is a flowchart showing an operation sequence of the video encoding apparatus according to an exemplary embodiment of the present invention.

Referring to FIG. 6, when one frame of an input digital video starts (601), the video encoding apparatus generates an IME start signal and performs IME for a first macroblock (602).

When the controller receives an IME done signal, that is, when the IME for the first macroblock is completed (603), the video encoding apparatus performs IME for a second macroblock and FME/MC for the first macroblock (604).

When the controller receives an IME done signal and an FME/MC done signal, that is, when the IME for the second macroblock and the FME/MC for the first macroblock are completed (605), the video encoding apparatus performs IME for a third macroblock, FME/MC for the second macroblock, and IP for the first macroblock (606).

When the controller receives an IME done signal, an FME/MC done signal, and an IP done signal, that is, when the IME for the third macroblock, the FME/MC for the second macroblock, and the IP for the first macroblock are completed (607), the video encoding apparatus performs IME for a fourth macroblock, FME/MC for the third macroblock, IP for the second macroblock, and CAVLC and DB for the first macroblock (608).

When all the IME, FME/MC, IP, CAVLC, and DB for the first macroblock are completed (609), it is determined whether the IME operations for all the macroblocks of the present frame have been completed (610). In an exemplary embodiment, the video encoding apparatus can determine whether the IME operations for all the macroblocks of the present frame have been completed by comparing the number of macroblocks with the number of IME operations.

When the IME operations for all the macroblocks of the present frame have not been completed, steps 608 and 609 are repeated.

When the IME operations for all the macroblocks of the present frame have been completed, the video encoding apparatus performs FME/MC for an N-th macroblock, IP for an (N-1)-th macroblock, and CAVLC and DB for an (N-2)-th macroblock (611).

When FME/MC operations for all the macroblocks of the present frame have been completed (612), the video encoding apparatus performs IP for the N-th macroblock and CAVLC and DB for the (N-1)-th macroblock (613). In an exemplary embodiment, the video encoding apparatus can determine whether the FME/MC operations for all the macroblocks of the present frame have been completed by comparing the number of macroblocks with the number of FME/MC operations.

When IP operations for all the macroblocks of the present frame have been completed (614), the video encoding apparatus performs CAVLC and DB for the N-th macroblock (615). In an exemplary embodiment, the video encoding apparatus can determine whether the IP operations for all the macroblocks of the present frame have been completed by comparing the number of macroblocks with the number of IP operations.

When CAVLC and DB operations for all the macroblocks of the present frame have been completed (616), a video encoding process for one frame of digital video data is completed. In an exemplary embodiment, the video encoding apparatus can determine whether the CAVLC and DB operations for all the macroblocks of the present frame have been completed by comparing the number of macroblocks with the number of CAVLC and DB operations.

The present invention can adjust lengths of time slots according to operation times of video encoding steps using done signals generated from functional blocks, thereby preventing unnecessary power consumption and delays when using a fixed-length time slot.

While the present invention has been shown and described in connection with exemplary embodiments thereof, it will be apparent to those skilled in the art that various modifications can be made to the exemplary embodiments without departing from the spirit and scope of the invention as defined by the appended claims.

According to an embodiment, a video encoding apparatus and method using a pipeline technique with a variable time slot are provided. More particularly, a video encoding apparatus and method capable of shortening a video encoding time by variably adjusting lengths of time slots when an H.264 video encoding process is performed in a pipeline structure are provided. The video encoding apparatus includes a plurality of functional blocks that perform video encoding steps based on an H.264 standard for macroblocks configuring input digital video signals in a pipeline structure, and a controller that controls lengths of time slots configuring the pipeline structure based on done signals received from the plurality of functional blocks. Lengths of time slots can be adjusted according to operation times of video encoding steps using done signals generated from functional blocks, thereby preventing unnecessary power consumption and delays when using a fixed-length time slot.

## Claims

1. A video encoding apparatus comprising:
a plurality of functional blocks that perform video encoding steps for macroblocks configuring input digital video signals in a pipeline structure; and
a controller that controls lengths of time slots configuring the pipeline structure based on done signals received from the plurality of functional blocks.

2. The video encoding apparatus of claim 1, wherein the controller sends start signals to the plurality of functional blocks in response to receipt of the done signals.

3. The video encoding apparatus of claim 2, wherein the controller comprises:
a control register that sets a parameter value required for video compression based on resolution of the digital video signals;
a macroblock counter that computes the number of macroblocks configuring one frame of the digital video signals using the parameter value; and
a pipeline controller that receives the done signals from the plurality of functional blocks and sends the start signals to the plurality of functional blocks according to the parameter value, the number of macroblocks, and the done signals.

4. The video encoding apparatus of claim 3, wherein when done signals are received from all functional blocks operating in a corresponding time slot, the pipeline controller sends start signals to functional blocks operating in the next time slot.

5. The video encoding apparatus of claim 3 or 4, wherein the plurality of functional blocks comprise:
an integer motion estimation (IME) module that estimates motion vectors of the macroblocks and determines an optimal inter mode;
a fine motion estimation/motion compensation (FME/MC) module that computes a unit motion vector cost based on the estimated motion vectors and the determined inter mode;
an intra prediction (IP) module that predicts an optimal intra mode based on the unit motion vector cost;
a context-adaptive variable length coding (CAVLC) module that entropy-encodes macroblocks for which the intra mode prediction has been completed; and
a deblocking (DB) module that deblocks and filters the entropy-encoded macroblocks.

6. The video encoding apparatus of claim 5, wherein the pipeline controller receives at least one of an IME done signal, an FME/MC done signal, an IP done signal, a CAVLC done signal, and a DB done signal, and
generates at least one of an IME start signal, an FME/MC start signal, an IP start signal, a CAVLC start signal, and a DB start signal.

7. The video encoding apparatus of one of claims 1 to 6, further comprising:
a video input module that receives the digital video signals from an outside source, receives at least one of vertical and horizontal synchronization signals of the video signals and data bus signals, and sends the received signals to the plurality of functional blocks.

8. The video encoding apparatus of one of claims 1 to 7, further comprising:
a frame memory that stores the input digital video signals and the macroblocks.

9. A video encoding method comprising:
estimating motion vectors of macroblocks configuring input digital video signals and determining an optimal inter mode;
computing a unit motion vector cost based on the estimated motion vectors and the determined inter mode;
predicting an optimal intra mode based on the unit motion vector cost;
entropy-encoding macroblocks for which the intra mode prediction has been completed; and
deblocking and filtering the entropy-encoded macroblocks, wherein steps of estimating the motion vectors to deblocking and filtering the entropy-encoded macroblocks are performed in a pipeline structure;
receiving done signals from a plurality of functional blocks for performing steps of estimating the motion vectors to deblocking and filtering the entropy-encoded macroblocks; and
controlling lengths of time slots configuring the pipeline structure in response to receipt of the done signals.

10. The video encoding method of claim 9, wherein the controlling of the time slot lengths comprises:
sending start signals to the plurality of functional blocks in response to receipt of the done signals.

11. The video encoding method of claim 10, wherein in sending the start signals to the plurality of functional blocks, the start signals are sent to selected functional blocks based on the number of macroblocks configuring one frame of the digital video signals.
